Europäisches Patentamt

European Patent Office

Office européen des brevets

(19)

(11) Publication number: **0 330 638**
**A1**

(12) # EUROPEAN PATENT APPLICATION

(21) Application number: **89850061.6**

(22) Date of filing: **22.02.89**

(51) Int. Cl.⁴: **F 02 D 15/04**
**// F01L3/08**

(30) Priority: **23.02.88 FI 880847**

(43) Date of publication of application:
**30.08.89 Bulletin 89/35**

(84) Designated Contracting States:
**DE ES FR GB IT NL SE**

(71) Applicant: **Pohjola, Jorma**
**Merituuli Hailuodontie**
**SF-90460 Oulunsalo (FI)**

(72) Inventor: **Pohjola, Jorma**
**Merituuli Hailuodontie**
**SF-90460 Oulunsalo (FI)**

(74) Representative: **Rostovanyi, Peter et al**
**AWAPATENT AB Box 5117**
**S-200 71 Malmö (SE)**

(54) Valve gear for internal combustion engine.

(57) The invention relates to a valve gear for an internal combustion engine. The internal combustion engine comprises one or more cylinders and a piston (2) reciprocating therein as well as a cylinder head (3) mounted on the upper end of the cylinder (1), wherein is arranged for each cylinder at least one exhaust valve (7) opening into an exhaust channel (8) and at least one suction valve (12) opening into a suction channel (13). The valves are operated by transmission of a cam shaft or the like. In accordance with the invention, the size of the combustion space·(5) of the cylinders (1) is adapted to be changed in a force-controlled manner periodically during one crankshaft revolution by means of a movable sleeve (15) fitted around at least one valve (7,12), which sleeve (15) is together with the valve (7,12) arranged to penetrate into the combustion space (5) for reducing the combustion space. The sleeve/sleeves (15) can be arranged around the suction valve/suction valves (12) and/or around the exhaust valve/exhaust valves (7).

F I G. 1

EP 0 330 638 A1

## Description

### Valve gear for internal combustion engine

The present invention relates to a valve gear for an internal combustion engine, which internal combustion engine comprises one or more cylinders and a piston reciprocating therein as well as a cylinder head mounted on the upper end of the cylinder, wherein is arranged for each cylinder at least one exhaust valve opening into an exhaust channel and at least one suction valve opening into a suction channel, which valves are operated by transmission of a cam shaft or the like.

In conventional internal combustion engines (four-sroke engines), the suction and escape valves of each cylinder are simultaneously open for a predetermined period of time due to engine flushing (exhaust gases). For example the suction valve will open by 20 crank degrees before the end of the exhaust stroke, i.e. the top dead centre, and the escape valve will close by 15 crank degrees after the dead end centre. In such a case, the suction and escape valves are thus simultaneously open by 35 crank degrees. As a result, incombustible fuel-air mixture will enter the exhaust channel, whereby due to the heat but incombustibility of the exhaust gases (there is not sufficiently oxygen in the exhaust channel needed for combustion) the exhaust gases will contain a large quantity of detrimental carbon monoxides and hydrocarbons due to an incomplete combustion. Due to the simultaneous opening state of the suction and escape valves, it has not been possible to increase the supercharger pressures in conventional engines provided with turbo-supercharges as desired, since excess-pressure air produced by the superchargers will flow directly out of the escape valves. For this reason, inter alia, a certain considerable delay is always present in conventional engines provided with superchargers when pressing the gas pedal, nor does the engine react immediately to the pressing of the gas pedal. In addition, since air can flow in such constructions into the escape channel, this will bring along an incomplete combustion in the escape channel, as a result of which the exhaust gases will contain a large quantity of detrimental carbon monoxide. If the valves do not have a common opening-state time, a large quantity of remainder exhaust gases will, in the cases concerned, remain in the combustion space of the engine. In such a case, the suction air entering the engine will heat and its volume will increase. Thus, filling the cylinder with the fuel-air mixture will remain insufficient, and formation of the carbon monoxide will similarly occur to a great extent.

For reducing detrimental exhaust gases, an attempt has been made to develop internal combustion engines for example in such a way that combustion therein would be as complete as possible. One solution to achieve this goal has earlier for example been that the compression ratio of the engine and especially the volume of the combustion space are varied during the engine operation. Such solutions have earlier been described for example in EP-application 82 925, DE-application 3 526 961 and GB-application 2 000 551. In US-patents 2 988 071 and 2 979 046, solutions have in turn been described, wherein the opening-state times of the suction and escape valves have been limited so that their simultaneous opening-state time would be as short aspossible. In both last-mentioned US-patents, this has been realized so that the suction and escape valves are arranged "one within the another" coaxially and that their timing has been realized in the afore-mentioned manner.

In the afore-mentioned publications, wherein the EP, DE and GB-publications relate to engines provided with a varying compression ratio, the construction has generally required a fairly complex counter-piston arrangement or the like. Solutions in accordance with the prior art also include several other drawbacks. As for the afore-mentioned EP-publications, it can be emphasized that in en engine according to this publication, there is always a space between the counter-piston and the actual piston, in which space remainder gases may remain. In this solution, gas exchange may thus not be sufficiently satisfactory, whereby most of the advantages, which the solution of the EP-publication concerned is intended to achieve, will be lost. The changing of the compression ratio into a forced-operation state during engine operation at every crankshaft revolution requires, in the solution according to the EP-publication, also a very complex crank and lever mechanism.

The goal of the present invention is to achieve an engine, wherein the exhaust gases produced by the engine are essentially completely free of carbon monoxide and also partially of hydrocarbons and which engine is furthermore provided with a better gas exchange in comparison with the prior art. In more detail, the goal of the invention is to achieve a valve gear for an internal combustion engine, which valve gear, adapted to the engine, will produce the afore-mentioned effect. In addition, the goal of the invention is to eliminate the disadvantages and drawbacks related to the prior art.

In order to reach the goals mentioned above and to be described below in more detail, the invention is mainly characterized in that the cylinder head is provided, at least around one valve, with a sleeve moving axially in the same direction with the valve concerned for changing · the combustion space volume of the cylinder in a force controlled manner periodically during the crankshaft rotation so that said sleeve is arranged to penetrate from the head into the combustion space individually with a valve corresponding to it for reducing the combustion space.

Several important advantages can be achieved by means of the invention, which advantages include for example the following. The solution in accordance with the invention improves the performance of the engine. This is caused by the fact that during the exhaust stroke and especially at end phase of

the exhaust stroke the combustion space volume is essentially zero. No remainder gases will remain in the combustion space, which gases would heat the fuel-air mixture. As a result, the mixture will enter the cylinder in a colder state, which results in more efficient combustion and a higher combustion potential, which in turn results from a more efficient and compact cylinder fitting.

In a solution in accordance with the invention, the valve timing does not necessarily have to be changed, but the invention provides a possibility of changing the timing so that a simultaneous opening state of the suction and exhaust valves will not necessarily be needed at all. This will in turn provide an additional advantage in such a way that no energy (especially kinetic energy of the suction air) is not essentially needed for flushing the cylinder and the valves, but all energy is available for the combustion occurrence itself. Because of this, the specific capacity of the engine will improve and the fuel consumption will also decrease, since no incombustible fuel-air mixture can enter the combustion channel.

In case of turbo-supercharged engines, the solution in accordance with the invention will provide an operation with essentially no delay, since in the arrangement according to the invention the cylinder does not have flushing corresponding to conventional solutions, whereby the excess pressure produced by the supercharger cannot escape from the exhaust valve, since the construction of the present invention will minimize the quantity of the remainder gases in the combustion space. Also in case of the turbo-supercharged solution, the invention will provide a better (maximal) cylinder filling. The power requirement set in connection with the engine design can be reached with a smaller turbo construction. The exhaust gases of the engine are clean. The carbon monoxide content is very low, since no suction air nor fuel-air mixture can enter the exhaust channel system due to the valve timing. The fuel consumption is lower with respect to each unit of power produced. The efficiency will improve because of a gas exchange with a more accurate control, and thus no incombustible or partly combustible fuel-air mixture can escape with the exhaust gases.

In the following, the invention will be described by way of an example with reference to the figures of the appended drawing, but the intention is not to limit the invention solely to these examples.

Fig. 1 is a schematic sectional view of an upper end of one cylinder and of part of the cylinder head of an engine according to the invention with valves in a closed position, when the invention is adapted to only one valve.

Fig. 2 is a view of the cylinder head in accordance with Fig. 1, seen from the cylinder direction, with valves in a closed position.

Fig. 3 is a schematic illustration of a suction valve in an open position during a suction stroke.

Fig. 4 is a illustration in accordance with Fig. 3, when the suction valve is closed during a compression and expansion stroke.

Fig. 5 is a illustration in accordance with Fig. 3 and 4 of a suction valve during an exhaust stroke.

Fig. 6 is an alternative embodiment of the solution of Fig. 1 in a corresponding sectional view with valves in the closed position.

Fig. 7 corresponds to the embodiment of Fig. 6, wherein the exhaust valve is provided with a moving sleeve, when the exhaust valve and the sleeve are penetrated into the combustion space and the exhaust valve is still closed.

Fig. 8 is a partial sectional view of an alternative embodiment of a valve gear arrangement according to the invention.

Fig. 9 is a view of the construction of Fig. 8 seen from above, when the springs of the sleeve are mounted in position.

Fig. 10 is a sectional view of the construction of the upper end of the valve gear of Fig. 9.

Fig. 11-13 are graphic illustrations showing the movements of the valve and the sleeve as a function of the crank angle of the crankshaft.

Fig. 14 is a schematic view of a cam shaft, by means of which the operation of Fig. 11-13 is achieved.

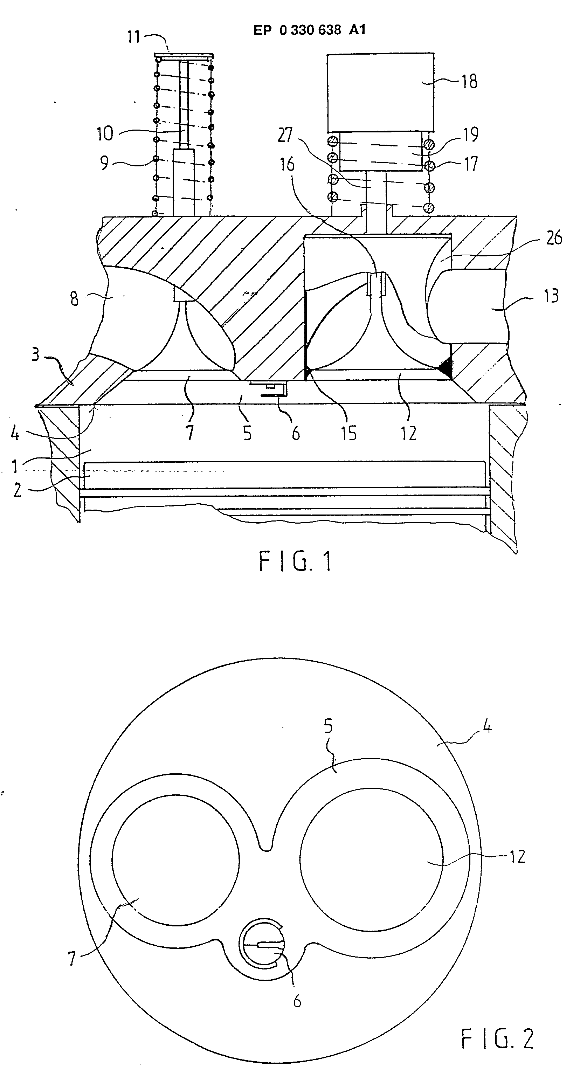

In the figures of the drawing, the cylinder of the engine is desig nated with a reference numeral 1. The reference numeral 2 relates to a piston reciprocating in the cylinder 1, and the reference numeral 3 generally relates to a cylinder head. The head 3 is in a normal manner provided with an escape valve 7 opening into an escape channel 8, and with a suction valve 12 opening into a suction channel 13. In addition, on the head 3 is mounted in a conventional manner an ignition plug 6, whose electrodes partly penetrate from the plane 4 of the head into a combustion space 5. In the embodiment of Fig. 1-5, the exhaust value 7 is of a conventional construction and comprises a spring 9 fitted around a valve shaft 10, which spring loads the exhaust valve 7 to the closed position. On the upper end of the exhaust-valve shaft is located a plate 11, into which the exhaust valve 7, either by affecting directly with the cam of the cam shaft or through a rocker arm, is opened at a predetermined moment against the force of the spring 9.

The construction and mounting mode of the suction valve 12 essentially deviate from conventional solutions. In a solution of the invention, the suction valve 12 is mounted movably on a sleeve 15, whose lower edge forms a seat surface for the suction valve 12.

A coaxial boring is formed in the head 3 with a suction-valve shaft 16 for the sleeve 15, into which boring the sleeve 15 is movably fitted. The sleeve 15 is loaded with a spring 17 onto the bottom of the boring formed in the head 3, and a cup-shaped part 18 is fitted on the upper end of the spring 17, which cup-shaped part affects through an arm 27 the sleeve 15 so that the cams formed on the cam shaft press the cup-shaped part 18 and move the sleeve 15 in its boring. Furthermore, a counterpart 19 communicating with the valve shaft 16 is fitted inside the cup-shaped part 16, inside which counterpart 19 the spring of the suction valve 12 itself is fitted. Thus, the suction valve 12 and the sleeve 15 have separate springs. The suction-valve shaft 16 and the sleeve arm 15 are located coaxially with respect to each other, and they are fitted movably with respect to each other. An opening 26 is formed on the side of the sleeve 15, which opening is opened into the suction channel 13.

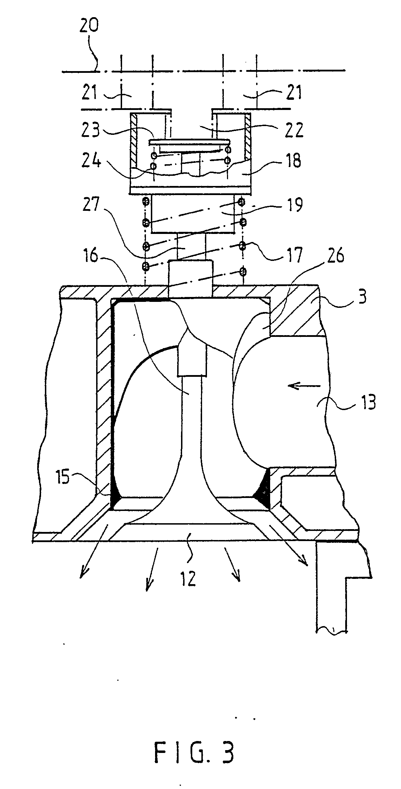

Fig. 3 shows the operation of the suction valve during the suction stroke. As mentioned above, the cam shaft 20 has separate cams 21 for the sleeve 15 and also a separate cam 22 for the suction valve 12. In the case of Fig. 3, the suction valve 12 is in a conventional manner in an open state, as the cam 22 presses the end of the valve shaft 16. Also, in the case of Fig. 3, the cams 21 of the sleeve 15 are disengaged from the cup-shaped part 18, when the sleeve 15 is in its upper position. As the sleeve 15 is in said upper position, the bottom of the sleeve contacts the bottom of the boring in the head 3.

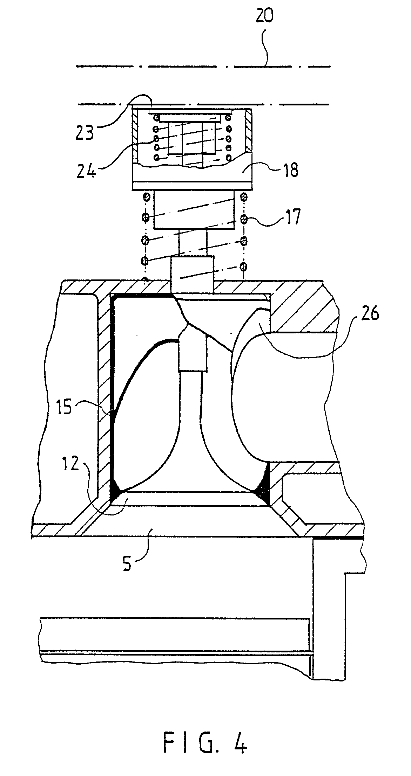

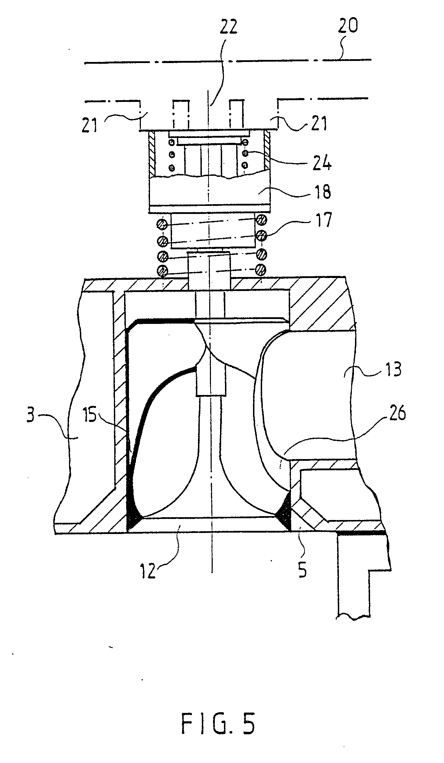

Fig. 4 shows a situation during a compression and expansion stroke, when the suction valve 12 has closed. Both the sleeve 15 and the valve 12 are then in their upper position, and the cams on the cam shaft 20 do not affect the valve nor the sleeve. Fig. 5 shows a situation during an exhaust stroke and especially the end phase of the exhaust stroke. In this situation, the cams 21 and 22 of the suction valve 12 and of the sleeve 15 press, on one hand, against the upper end of the valve shaft, and on the other hand, against the cup-shaped part 18 in such a way that both the sleeve 15 and the valve 12 are penetrated into the combustion space 5. In this situation, the suction valve 12 leans against a seat surface formed on the upper edge of the sleeve 15, whereby the suction valve 12 is closed. Then, the suction valve 12 and the sleeve 15 form a piston-like piece, which during the exhaust stroke penetrates into the combustion space 5 and thus essentially reduces the size of the combustion space. The movements of the suction valve 12 and the sleeve 15 are timed by the design of the cams 21 and 22 so that when transferring from the exhaust stroke of Fig. 5 to the suction stroke of Fig. 3, the sleeve 15 rises rapidly up whereas the suction valve 12 still remains down. Thus, the suction valve 12 remains in position and opens as a result of the movement of the sleeve 15. The upward movement of the sleeve 15 is designed very rapid, whereby, at the start of the suction stroke, the suction valve 12 rapidly transfers into a completely open position. According to a useful feature of the invention, the suction valve starts opening more when the sleeve starts rising and opening the suction value. This solution essentially speeds up the opening of the suction valve and/or the exhaust valve. A simultaneous sleeve and valve movement can also be utilized at the closing phase of the valves.

As described above with reference to Fig. 2, the combustion spaces 5 in the engine according to this invention are essentially designed on the cylinder head 3 as a recess surrounding only the suction and exhaust valves 12 and 7 as well as the ignition plug 6. Thus, no combustion space will actually remain between the plane 4 of the head and the end of the piston 2, since as the piston 2 enters the top dead centre, it is located at a very small clearance from the plane 4 of the head. Said clearance can be of the order of 1-2 mm. Since at the end of the exhaust stroke the size of the combustion space is essentially reduced by means of the sleeve 15 and the suction valve 12 in the manner described, the combustion gases can be more efficiently forced to escape into the exhaust channel 8. Also the exhaust valve 7 is naturally open during the exhaust stroke, which also partially reduces the size of the combustion space. Thus, the exit of the gases from the combustion space 5 is extremely efficient. Another essential feature of the invention is that the sleeve 15 rises rapidly up at the start of the suction stroke, whereby the suction valve is immediately completely open. At the start of the suction stroke, the exhaust valve 7 is closed, whereby a simultaneous opening state of the valves does not necessarily exist, nor can exhaust gas flow from the exhaust channel 8 back to the combustion space 5. The valve timing described above and the changing of the compression ratio during engine operation make the exhaust gases escape efficiently from the combustion space. However, it is yet not necessary to change the valve timing in the afore-mentioned manner, although the additional advantages described above can be achieved by changing the timing.

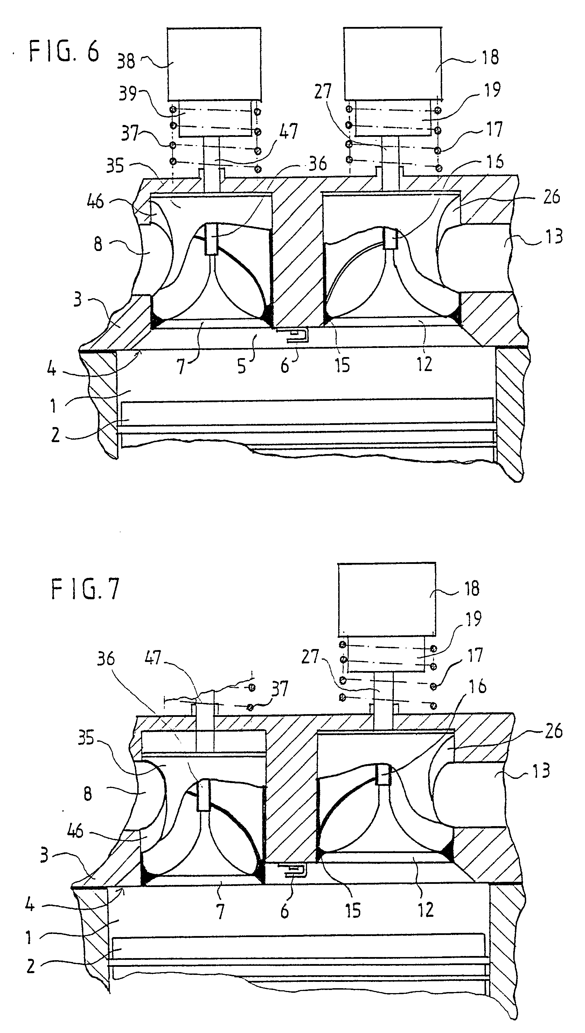

Fig. 6 and 7 show an alternative embodiment for the solution described in Fig. 1-5. In the embodiment of Fig. 6 and 7, also the exhaust valve 7 is provided with a sleeve 35, the arrangement of which corresponds to the sleeve 15 described in connection with the suction valve 12. Thus, a coaxial boring is arranged also for the sleeve 35 of the exhaust valve 7 on the head 3 with an exhaust-valve shaft 36, into which boring the sleeve 35 is movably fitted. The sleeve 35 is furnished with an arm 37 surrounding the exhaust-valve shaft 36, on the upper end of which arm 37 is fitted a cup-shaped part 38, which is loaded by a spring 37 contacting the head 3 and drawn by this spring toward the bottom of the boring formed on the head. Inside the cup-shaped part 38 is fitted a counterpart 39, which communicates with the exhaust-valve shaft 36 and inside which a spring (not shown) of the exhaust valve 7 is fitted in a similar manner as was described with reference to Fig. 1-5 with respect to the construction of the suction valve 12. The gear and the gear mechanism of the exhaust valve 7 and the related sleeve 35 correspond to those illustrated above in connection with the suction valve 12, and the cam shaft or the like has thus a separate cam for the exhaust valve 7 and separate cams for the sleeve 35 of the exhaust valve, which cams are in a similar manner arranged symmetrically with respect to a sleeve arm 47. An opening 46 is arranged also on the side of the sleeve 35 of the exhaust valve 7, which opening in this case opens into the exhaust channel 8. The opening 46 is in the axial direction of the sleeve 35 formed so large that a free flow route opens through it into the exhaust channel 8 independently of the axial position of the sleeve 35. Fig. 7 shows the end phase of the expansion stroke, whereby the sleeve with its valves has risen essentially half of its maximal position. Then, the sleeve 35 starts rising and the valve starts descending. In such a situation, the piston should essentially be in the lower position.

In the construction of Fig. 7, the movements of the valve of the sleeve are thus timed at least partially opposite during the starting and/or closing phase of one stroke. This arrangement quite essentially speeds up the opening and/or closing of the flow opening. It is advantageous that the value lifted by the sleeve near the piston surface starts opening additionally as the piston descends. A corresponding additional opening made possible by the construction of the invention can be utilized also in other phases of the gas exchange. Such a construction opens up a completely new solution for valve timings and makes possible an increase in the efficiency and power, which has not been possible before this.

In the situation of Fig. 6, both the suction valve 12 and the exhaust valve 17 are closed, and the sleeves 15 and 35 are correspondingly in their upper position. This corresponds to the situation during the compression stroke and at least at the beginning of the expansion stroke. Fig. 7 shows an alternative embodiment for the valve and the sleeve. In this case, the exhaust valve 7 and the exhaust-valve sleeve 35 have penetrated into the combustion space 5, whereby they together form a "piston", which reduces the volume of the combustion space 5. The exhaust value 7 and the related sleeve 35 are pushed to a position shown in Fig. 7, suitably during the end phase of the expansion stroke. At the start of the exhaust stroke, the sleeve 35 of the exhaust valve starts rising upward as the exhaust valve 7 continuously descends. A flow route will then open very rapidly between the seat surface of the sleeve 35 and the exhaust valve 7 into the exhaust channel 8 for removal of the exhaust gases. At the end of the exhaust stroke, the valve 7 rises up. The sleeve 35 descends and at the start of the suction stroke the valve 7 closes against the seat surface of the sleeve 35 in a conventional manner as the suction valve 12 opens. In the embodiment of Fig. 6 and 7, the operation of the suction valve 12 can completely correspond to that illustrated earlier with reference to Fig. 1-5. In contrast to the exemplary embodiments of Fig. 1-7 of the drawing, the valve gear of the invention may also comprise an arrangement, in which only the exhaust valve 7 is provided with the afore-mentioned sleeve 35, whereas the construction and operation of the suction valve 12 is completely conventional without the sleeve 15 shown in the figures of the drawing. If, however, the sleeves 15 and 35 shown in the drawings are used in the suction and exhaust valve, the exit of the exhaust gases from the combustion space 5 of the cylinder becomes even more efficient.

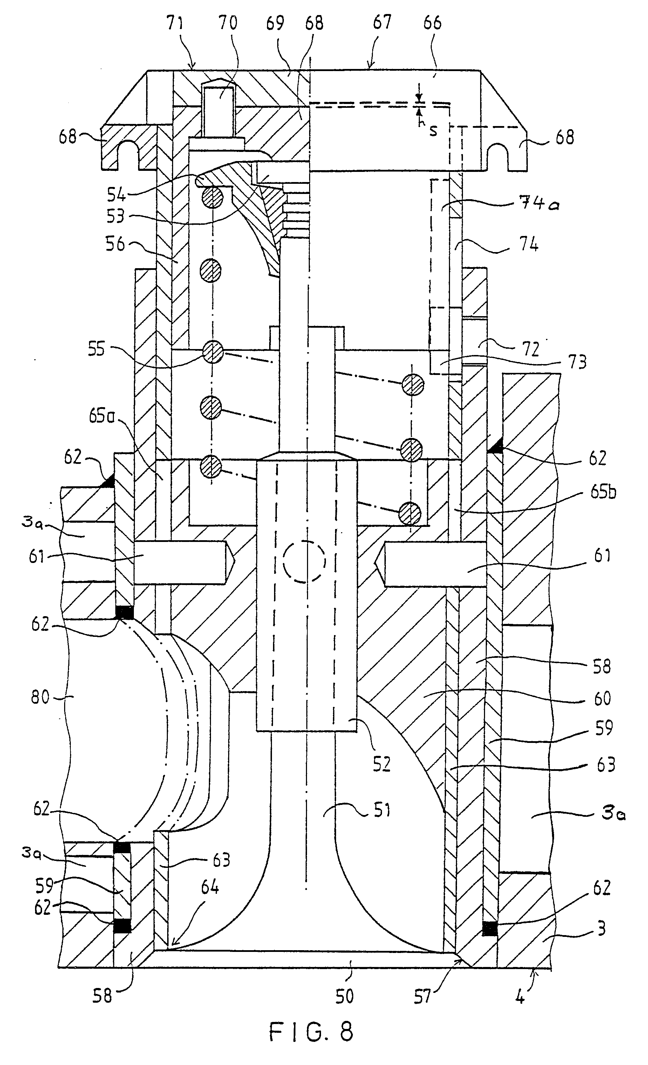

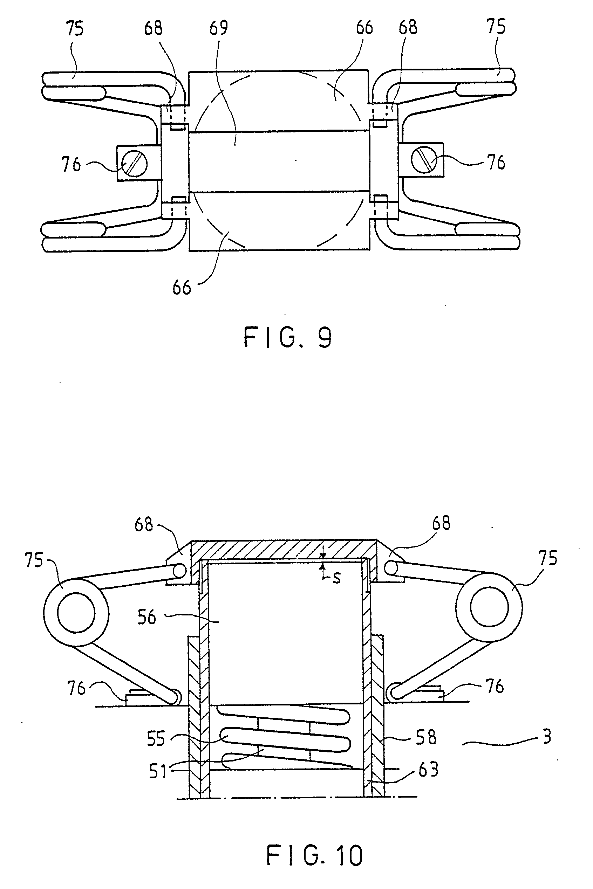

Fig. 8-10 of the drawing show an alternative embodiment for the valve gear in accordance with the invention. In Fig. 8 and 10, the cylinder head is designated with the reference numeral 3, and the plane of the head on the side of the cylinder space is designated with the reference numeral 4. The channel opening into the cylinder is marked with the reference numeral 80 and the valve with the reference numeral 50. In the construction of Fig. 8, a coaxial boring with respect to the valve shaft 51 is formed on the cylinder head 3, in which boring is mounted a fixed sleeve 58, at the lower end of which a seat surface 57 is formed for the valve 50. The fixed sleeve 58 is mounted immovably with respect to the head 3 by means of a filler sleeve 59, which is fastened to the head 3 e.g. with weld joints 62. Openings corresponding to the shape of the channel 80 leading to the cylinder space are formed in the fixed sleeve 58 and the filler sleeve 59. The reference numeral 3a relates to water spaces formed on the head 3, which water spaces extend to the outer surface of the filler sleeve 59.

Inside the fixed sleeve 58 is fitted a guide 60, whose outer diameter is smaller than the inner diameter of the fixed sleeve 58 so that a circular gap remains between the fixed sleeve 58 and the guide 60. The guide 60 is fastened immovably in position e.g. by means of fastening pins 61. The guide 52 of the valve 50, which guides the valve shaft 51, is fastened immovably to said guide 60. A guide surgace is formed in the guide 60, which smoothly connects the channel 80 to the valve opening opening into the cylinder space.

In the circular gap between the fixed sleeve 58 and the guide 60 is fitted a moving sleeve 63, which corresponds to the sleeves 15 and 35 shown in Fig. 1-7. The moving sleeve 63 is thus fitted movable coaxially with the valve 50. In order to make the moving sleeve 63 move in the circular gap, longitudinal openings 65a and 65b for the fastening pins 61 are arranged axially in the sleeve 63. In addition, the opening 65a on the side of the channel 80 is formed such that independently of the position of the sleeve 63 it makes a free gas flow possible from the channel 80 into the cylinder space.

An adjusting plate 53 and the necessary fastening elements 54 for the spring 55 have been fitted at the upper end of the valve shaft 51. The valve spring 55 is thus at its upper end supported on said fastening elements 54 and at its lower end on the the guide 60. A cup 56 is fitted on the adjusting plate 53, which cup partially surrounds the spring 55. On top of the cup 56 is fitted an end piece 66, which is fastened immovably with respect to the moving sleeve 63 e.g. with a threshold joint 77 shown in Fig. 10. The upper surface of the cup 56 is located at a clearance $\underline{S}$ from the lower surface of the end piece 66. In order to prevent the movable cup 56 from rotating with respect to its longitudinal axis, a guide screw 72 is mounted on the fixed sleeve 58, and an longitudinal guide groove 74a is formed in the cup 56 for the head 73 of the screw 72. The movable sleeve 63 is correspondingly provided with a groove 74. The upper surface of the end piece 66 is not uniform, but a longitudinal gap with respect to the axial direction of the valve 50 is arranged therein, in which gap an additional piece 69 is fitted, which is rigidly fastened to the cup 56 e.g. with screws 70 shown in Fig. 8 or with corresponding fastening elements. The additional piece 69 and the cup can thus move in the axial direction of the valve 50 with respect to the end piece 66. Ears 68 have been formed in the end piece 60 for the springs 75 of the moving sleeve 63, which springs 75 are at their opposite end fastened to the cylinder head 3 with fastening elements 76. When the valve is in the closed position in accordance with Fig. 8, whereby both the moving sleeve 63 and valve 50 are in their upper position, a clearance 64 of the order of 0.5 mm remains between the lower end of the sleeve 63 and the valve collar 50.

The operation of the embodiment of Fig. 8-10 is as follows. The valve 50 shown in Fig. 8 is e.g. a suction valve, which is closed during the compression and expansion stroke. In this situation, both the moving sleeve 63 and the valve 50 are in their upper position due to the effect of the springs 75 and 55, whereby the cams 21 and 22 on the cam shaft 20 shown e.g. in Fig. 3 and 4 do not affect the valve 50 nor the sleeve 63. When transferring from the situation of Fig. 8 (expansion stroke) to the exhaust stroke, the cams 21 of the sleeve 63 on the cam shaft 20 press against the plane surfaces 67 of the end piece 66 on both sides of the additional piece 69. The moving sleeve 30 then starts descending, whereby the clearance 64 between the sleeve and the valve 50 closes. At this phase, the valve cam 22 also starts affecting the additional piece 69, whereby both the sleeve 63 and the valve 50 together penetrate into the combustion space of the cylinder. In this situation, the valve 50 leans against the lower edge of the sleeve 63, when the valve 50 is closed. The valve 50 and the sleeve 63 thus form a piston-like piece, which during the exhaust stroke penetrates into the combustion space, which thus essentially reduces the size of the combustion space.

The movements of the valve 50 and the sleeve 63 are by means of the design of the cams 21 and 22 timed in such a way that when transferring from the exhaust stroke to the suction stroke, the sleeve 63 lifts up whereas the valve 50 keeps descending. Owing to the effect of the mutually opposite movements of the valve 50 and the movable sleeve 63, the valve opens very rapidly so that at the start of the suction stroke the valve 50 rapidly transfers to a completely open position. When transferring from the suction stroke to the compression stroke, the valve 50 closes in such a way that the movable sleeve 63 descends toward the valve 50 and the valve 50 rises up to contact the sleeve 63, when the closing occurs. After this, the valve 50 and the sleeve 63 rise up together, until the valve 50 contacts the seat surface 57. This illustrates the operation of the valve gear of Fig. 8 in a simplified form, but it is naturally completely obvious that deviations from the above description are possible e.g. with respect to the synchronization of the movements of the valve 50 and the sleeve 63, which can be readily arranged by means of the cams 21 and 22. The construction of Fig. 8-10 can naturally be applied also in connection with exhaust valves, and also the operation of the construction occurs in a similar manner.

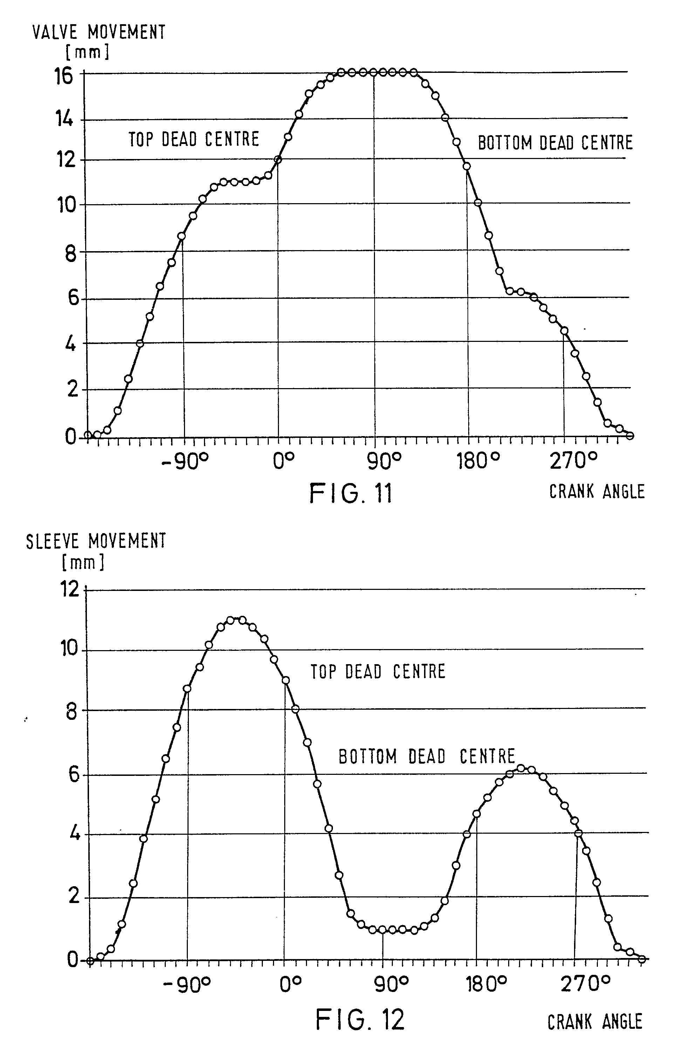

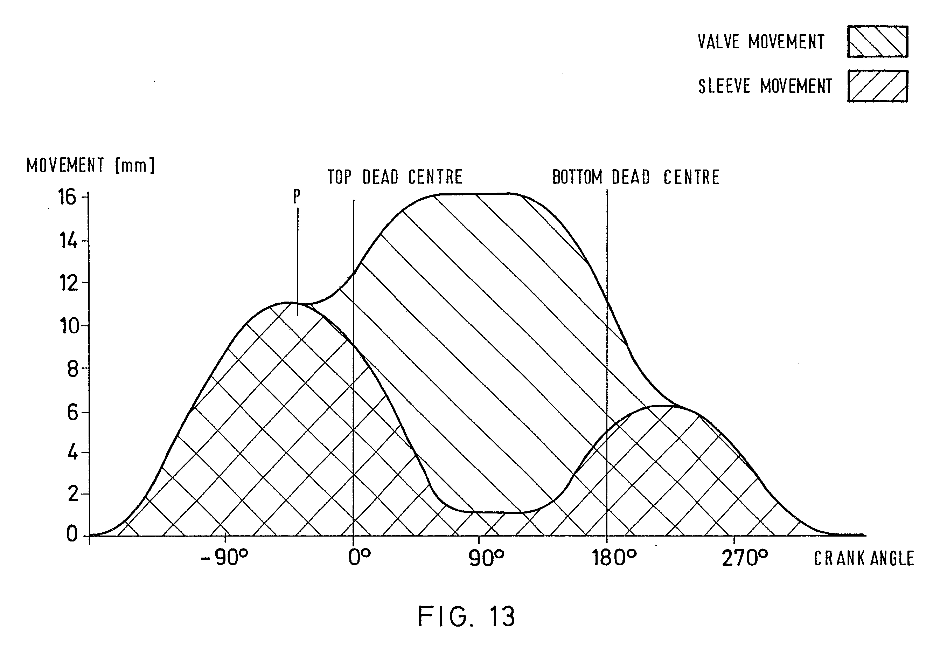

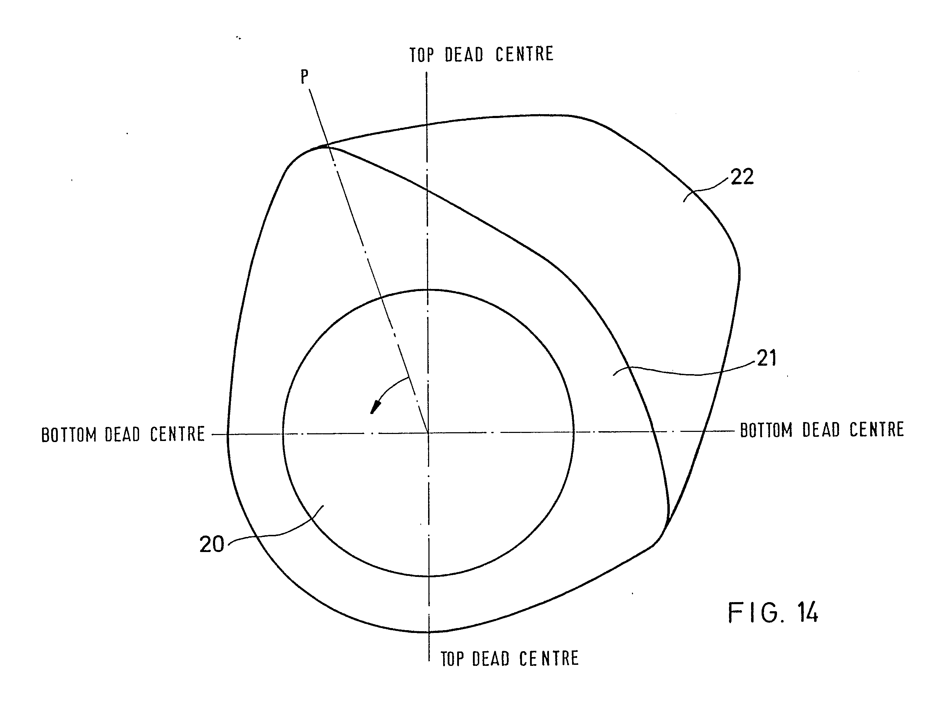

The graphic illustrations of Fig. 11-13 are intended to illustrate the effects, which can be achieved by means of the solution of the invention, and Fig. 14 schematically shows how the the cams 21 and 22 of the cam shaft 20 are to be designed to realize the goals of Fig. 11-13. The graphic illustrations show the movable distance of the valve 50 and the movable sleeve 63 from the plane of the head to the cylinder space as a function of the crank angle. The graphic illustrations specifically refer to the operation of the suction valve 50 and the related sleeve 63.

The graphic illustrations are based on a situation, wherein an exhaust stroke prevails in the cylinder, in which case the suction valve 50 is naturally closed. When the piston starts rising up from the bottom dead centre for the exhaust stroke, which in Fig. 11-13 is marked at -180° of the crank angle, toward the sylinder head, both the sleeve 63 and the suction valve 50 start penetrating into the combustion space. The start of the movement of the valve 50 and the sleeve 63 can in fact be timed in another manner, i.e. the start of their movement does not have to occur at the point shown in Fig. 11-13. During the exhaust stroke, the valve 50 and the related sleeve 63 thus penetrate into the combustion space together in such a way that the lower edge of the sleeve 63 is located tightly against the valve collar 50, i.e. the clearance 64 shown in Fig. 8 is completely closed. Thus the valve 50 and the sleeve 63 form together a cylinder-like piece, which, when penetrating into the combustion space, reduces the combustion space and facilitates the exit of the exhaust gases during the exhaust stroke.

The valve 50 and the sleeve 63 penetrate into the combustion space in such a way that when the piston is in its top dead centre a sufficient gap (e.g. of the order of 1 mm) remains between the piston end and the valve 50. In accordance with Fig. 11-13, the direction of the movement of the sleeve 63 changes considerably before the piston reaches its top dead centre and it starts returning toward the plane of the head. In Fig. 11-13, this point is marked with the reference code P. From this point, the valve 50 keeps opening into its extreme position for the duration of the exhaust stroke. At the point P, a gap starts thus forming between the valve 50 and the sleeve 63, i.e. the valve opens. The location of the point P illustrated in the figures can be varied, if desired.

In the valve gear according to the invention, the suction valve 50 can, however, be opened considerably earlier than in conventional valve constructions, since in the solution of the invention the combustion gases flowing out of the exhaust valve as well as the fuel-air mixture flowing in from the suction valve cannot mix with each other, nor does the fuel-air mixture flow directly into the exhaust channel via the exhaust valve. This is caused by the fact that the gases escaping from the cylinder and the fuel-air mixture flowing into the cylinder are located in different layers in the cylinder, since the suction valve 50 and the sleeve 63 are penetrated inside the combustion space. Thus, the opening state of the suction valve 50 is considerably longer than that of conventional solutions without the drawbacks related to a long-lasting opening state of the suction valve, which drawbacks are common in high-trimmed engines. The valve gear of the invention thus improves the engine output without related drawbacks, such as an uneven operation and impure exhaust gases of the engine.

The graphis illustrations (Fig. 11-13) clearly show that the opening of the valve 50 occurs considerably more rapidly than in conventional constructions. This is caused by the fact that after the point P the valve 50 and the sleeve 63 move in opposite directions. Similarly, the closing of the valve 50 occurs very rapidly, since also in this case the valve 50 and the sleeve 63 move in opposite directions. When the piston starts approaching the bottom dead centre, which in Fig. 11-13 occurs at 180° of the crank angle, the valve 50 begins to close. Similarly, the sleeve 63 again changes its direction of movement, i.e. it again starts penetrating into the combustion space. The valve 50 and the sleeve 63 contact each other slightly after the bottom dead centre, whereby the sleeve 63 once more changes its direction of movement and moves with the valve 50 to the plane of the head for the duration of the compression and the expansion stroke. It can be observed in the graphic illustrations that the invention considerably extends the opening-state time of the valve 50, and in addition, the opening and closing of the valve occur very rapidly. Fig. 14 schematically illustrates how the operation of the valve 50 and the sleeve 63 shown in Fig. 11-13 can be achieved by means of a proper design of the valve cam 22 and the sleeve cams 21. However, Fig. 14 is to be regarded only as an example of the design of the cam shaft 20.

The invention has been described above by way of an example only with reference to the figures of the appended drawing. However, the intention is not to limit the invention to the examples shown in the figures, but many modifications are possible within the scope of the idea of the invention in accordance with the appended Claims.

## Claims

1. Valve gear for an internal combustion engine, which internal combustion engine comprises one or more cylinders and a piston (2) reciprocating therein as well as a cylinder head (3) mounted on the upper end of the cylinder (1), wherein is arranged for each cylinder at least one exhaust valve (7) opening into an exhaust channel (8) and at least one suction valve (12) opening into a suction channel (13), which valves are operated by transmission of a cam shaft (20) or the like, **characterized** in that the cylinder head (3) is provided, at least at one valve (7,12,50), with a sleeve (15,35,63) moving coaxially in the same direction with the valve (7,12,50) concerned for changing the volume of the combustion space (5) of the cylinder (1) in a force controlled manner periodically during the crankshaft rotation so that said sleeve (15,35,63) is arranged to penetrate from the head (3) into the combustion space (5) individually with a valve (7,12,50) corresponding to it for reducing the combustion space (5).

2. Valve gear according to Claim 1, **characterized** in that the sleeve/sleeves (35,63) are fitted around the suction valve/suction valves (12,50).

3. Valve gear according to Claim 1, **characterized** in that the sleeve/sleeves (35,63) are fitted around the exhaust valve/exhaust valves (7,50).

4. Valve gear according to Claim 1, **characterized** in that both the suction valve/suction valves (12) and the exhaust valve/exhaust valves (7) are provided with a sleeve (15,35,63).

5. Valve gear according to any of the preceding Claims, **characterized** in that a seat surface is formed on the lower edge of each sleeve (15,35) for a valve (12,7) related to the sleeve.

6. Valve gear according to any of the Claims 1-4, **characterized** in that a counter-surface is formed on the lower edge of the sleeve (63), which counter-surface is located against the upper surface of the valve collar (50).

7. Valve gear according to any of the preceding Claims, **characterized** in that an opening (26,46) is formed on the side surface of each sleeve (15,35,63), through which opening a flow route opens from said sleeve (15,36,63) into a suction or exhaust channel (8,13,80) corresponding to the sleeve.

8. Valve gear according to any of the preceding Claims, **characterized** in that for each sleeve (15,35,63) a coaxial boring with respect to the shaft of the corresponding valve (7,12,50) is formed on the cylinder head (3), inside which boring the sleeve (15,35,63) concerned is movably fitted.

9. Valve gear according to Claim 8, **characterized** in that a fixed sleeve (58) immovable with respect to the head (3) is fitted in the boring, inside which fixed sleeve (58) said movable sleeve (63) is fitted.

10. Valve gear according to Claim 9, **characterized** in that a fixed guide (60) with respect to the head (3) is fitted inside the movable sleeve (63), which guide (60) connects the channel (80) leading into the cylinder to the opening opening into the cylinder, and that the movable sleeve (63) is movably fitted in a circular gap space between said guide (60) and the fixed sleeve (63).

11. Valve gear according to any of the Claims 1-5 or 7-8, **characterized** in that each sleeve (15,35) is sealed with respect to the cylinder head (3) and to the boring corresponding to the sleeve in such a way that the entry of exhaust gases or the fuel-air mixture into the channel (8,13) corresponding to each sleeve (15,35) is prevented from between the sleeve (15,35) and the boring corresponding to it.

12. Valve gear according to any of the Claims 1-5 or 7-9, **characterized** in that when the sleeve (15,35) is in its upper position, the bottom is fitted to contact the bottom of the boring formed on the head (3) for the sleeve concerned.

13. Valve gear according to any of the Claims 1, 2 or 4-12, **characterized** in that the sleeve (15,63) fitted in connection with the section valve (12,50) is arranged, together with the suction valve (12,50), to penetrate during the end phase of the exhaust stroke into the combustion space (5) in such a way that the suction valve (12,50) and the sleeve (15,63) corresponding to it together form a piston-like piece, which essentially reduces the volume of the combustion space.

14. Valve gear according to any of the Claims 1 or 3-12, **characterized** in that during the expansion stroke, the sleeve (35,63) fitted in connection with the exhaust valve (7,50) is, together with the exhaust valve (7,50) corresponding to it, arranged to penetrate into the combustion space (5) in such a way that said exhaust valve (7,50) and the sleeve (35,63) together form a piston-like piece, which essentially reduces the volume of the combustion space (5).

15. Valve gear according to any of the Claims 1-5, 7-8 or 11-14, **characterized** in that a seal is provided between the sleeve (15,35) and the head, which seal prevents the exhaust gases from discharging into the suction and/or exhaust channel.

16. Valve gear according to any of the preceding Claims, **characterized** in that the movements of the sleeve and the valve are, during the starting and closing phase of a certain stroke, timed to be at least partially opposite, which essentially speeds up the opening and/or closing of the flow opening.

17. Valve gear according to any of the preceding Claims, **characterized** in that when opening the valve (50) the sleeve (63) is first arranged to move in the direction of movement of the valve (50), whereafter the sleeve (63) is arranged to change its direction of movement in an opposite direction with respect to the direction of movement of the valve (50).

18. Valve gear according to any of the preceding Claims **characterized** in that when closing the valve (50) the sleeve (63) is first arranged to move in an opposite direction with respect to the direction of movement of the valve (50) and when the valve (50) and the sleeve (63) contact each other, the sleeve (63) is arranged to change its direction of movement according to the direction of movement of the valve (50).

19. Valve gear according to any of the preceding Claims, **characterized** in that the valve lifted by the sleeve near the piston surface starts opening additionally as the piston descends and/or that the corresponding additional opening made possible by the construction of the invention is utilized also in other phases of the gas exchange.

EP 0 330 638 A1

F I G. 1

F I G. 2

F I G. 3

FIG. 4

FIG. 5

FIG. 6

FIG. 7

FIG. 8

FIG. 9

FIG. 10

VALVE MOVEMENT
[mm]

TOP DEAD CENTRE

BOTTOM DEAD CENTRE

-90°    0°    90°    180°    270°

FIG. 11

CRANK ANGLE

SLEEVE MOVEMENT
[mm]

TOP DEAD CENTRE

BOTTOM DEAD CENTRE

-90°    0°    90°    180°    270°

FIG. 12

CRANK ANGLE

FIG. 13

VALVE MOVEMENT

SLEEVE MOVEMENT

MOVEMENT [mm]

TOP DEAD CENTRE

BOTTOM DEAD CENTRE

16

14

12

10

8

6

4

2

0

P

-90°    0°    90°    180°    270°    CRANK ANGLE

EP 0 330 638 A1

FIG. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 8, no. 2 (M-266)[1439], 7th January 1984; & JP-A-58 165 544 (HITACHI ZOSEN K.K.) 30-09-83 * Whole document * | 1,3,7,8 ,11,15 | F 02 D 15/04 // F 01 L 3/08 |
| A | PATENT ABSTRACTS OF JAPAN, vol. 11, no. 25 (M-556)[2472], 23rd January 1987; & JP-A-61 197 731 (SUSUMU NAGAI) 02-09-1986 * Whole document * | 1,3,5,7 ,8,11, 15 | |
| A | DE-A-2 612 430 (DAIMLER-BENZ) * Page 6, lines 7-30; page 7, lines 7-10; figure * | 1,2,6 | |

TECHNICAL FIELDS
SEARCHED (Int. Cl.4)

F 02 D
F 01 L

The present search report has been drawn up for all claims

| Place of search | Date of completion of the search | Examiner |
|---|---|---|
| THE HAGUE | 29-05-1989 | LEFEBVRE L.J.F. |

EPO FORM 1503 03.82 (P0401)